(19) **Europäisches Patentamt**

**European Patent Office**

**Office européen des brevets**

(11) **EP 0 969 579 A2**

(12) **EUROPÄISCHE PATENTANMELDUNG**

(43) Veröffentlichungstag:
05.01.2000 Patentblatt 2000/01

(51) Int. Cl.7: **H02H 3/00**

(21) Anmeldenummer: **99250189.0**

(22) Anmeldetag: **15.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.06.1998 DE 19830065**

(71) Anmelder:
**SIEMENS AKTIENGESELLSCHAFT**
**80333 München (DE)**

(72) Erfinder:
- **Baumgaertl, Ulrich**
  **13599 Berlin (DE)**
- **Hochgraef, Holger**
  **18845 Wusterhausen (DE)**
- **Röhl, Wolfgang**
  **13503 Berlin (DE)**

(54) **Elektronischer Überstromauslöser und Verfahren zu seinem Betrieb**

(57) Die Erfindung beschreibt ein Verfahren zum Betrieb eines mit einem Mikroprozessor arbeitenden elektronischen Überstromauslösers eines Leistungsschalters, dem als Eingangsgrößen die Netzspannung und der Strom durch einen Verbraucher zur Verfügung stehen.

Die Erfindung besteht darin, daß der Strom-Ansprechwert des elektronischen Überstromauslösers durch den Mikroprozessor in Abhängigkeit von der Netzspannung nach einer auf den angeschlossenen Verbraucher einstellbaren Strom/Spannungs-Beziehung verstellt wird. Damit wird eine Anpassung des Überstromauslösers an jede Art von Verbrauchern vorgenommen und stets der richtige Ansprechwert auch bei von der Nennspannung abweichender Netzspannung zur Verfügung gestellt.

## Beschreibung

Die Erfindung betrifft ein Verfahren zum Betrieb eines mit einem Mikroprozessor arbeitenden elektronischen Überstromauslösers eines Leistungsschalters, dem als Eingangsgrößen die Netzspannung und der Strom durch einen Verbraucher zur Verfügung stehen, sowie einen zur Durchführung dieses Verfahrens geeigneten Überstromauslöser.

Die Auslöser von Leistungsschaltern sollen eine elektrische Anlage bzw. elektrische Verbraucher vor Kurzschlüssen und vor thermischer Überlastung schützen. Sie sind zu diesem Zweck mit Stromwandlern verbunden, die den Strom, den der angeschlossene, zu schützende Verbraucher dem Netz entnimmt, messen. Der Auslöser ist auf einen bestimmten Strom-Ansprechwert einstellbar, ab dem er einen Strom als nicht betriebsnormal erkennt und, je nach der Höhe des Stroms sofort oder verzögert, einen Auslösebefehl an den Leistungsschalter erteilt und den Verbraucher vom Netz trennt.

Eine solche Stromüberwachung ist für die üblichen ohmschen und ohmisch-induktiven Verbraucher, die den größten Teil der Verbraucher im Netz ausmachen, bei stabilen Netzbedingungen unproblematisch und erlaubt einen hinreichenden Schutz. Die Stromüberwachung ist aber bereits bei schwankender Netzspannung nicht mehr optimal. Üblicherweise wird der Strom-Ansprechwert auf den als höchsten zu erwartenden Spannungswert bezogen, damit es nicht zu Fehlauslösungen infolge des gegenüber dem Strom bei Nennspannung erhöhten Stroms kommt. Sinkt nun die Spannung auf einen Wert unterhalb der Nennspannung, werden fehlerhafte Absenkungen der Impedanz des Verbrauchers durch die Stromüberwachung dann nicht erfaßt, wenn der (hohe) Ansprechwert des Stroms noch nicht erreicht wird. Beim Verbraucher kann es dadurch zu Schäden kommen.

Noch problematischer ist diese Art der Stromüberwachung für die ständig steigende Zahl moderner Verbraucher mit spezifischer Strom-Spannungs-Charakteristik. So ergibt sich bei Verbrauchern, die über geregelte Umrichter betrieben werden, ein geradezu umgekehrtes Verhalten. Wegen der durch den Umrichter konstant geregelten Leistungsaufnahme des Verbrauchers erhöht sich hier die Stromaufnahme bei Unterspannung. Das heißt, die Stromüberwachung muß auf den Fall der niedrigsten zu erwartenden Betriebsspannung eingestellt werden. Damit wird aber wiederum bei erhöhter Spannung ein Fehler am Verbraucher wegen des möglicherweise noch nicht erreichten Strom-Ansprechwertes nicht erkannt.

Der Erfindung liegt die Aufgabe zugrunde, ein Verfahren und einen Überstromauslöser anzugeben, mit denen für jeden Verbraucher unabhängig von eventuellen Netzspannungsschwankungen ein Fehler sicher erkannt wird.

Erfindungsgemäß wird die Aufgabe dadurch gelöst, daß der Strom-Ansprechwert des elektronischen Überstromauslösers durch den Mikroprozessor in Abhängigkeit von der Netzspannung nach einer auf den angeschlossenen Verbraucher einstellbaren Strom/Spannungs-Beziehung verstellt wird.

Die Verstellung erfolgt nach der Strom/Spannungs-Beziehung

$$I = a/U + b + cU + dU^2 + ...$$

In einem zur Durchführung des Verfahren geeigneten Überstromauslöser verwertet der Mikroprozessor die aktuellen Strom- und Spannungswerte nach einer eingegebenen Beziehung, z. B. wie oben angegeben, und errechnet einen aktuellen Strom-Ansprechwert. Zur Einstellung der Konstanten der Strom/Spannungs-Beziehung sind z. B. auf dem Bedientableau des Überstromauslösers entsprechende Einstellmöglichkeiten vorgesehen.

Elektronische Auslöser, die neben Stromwandlern auch mit Spannungswandlern ausgerüstet sind, sind an sich bekannt, siehe z. B. die DE 195 07 934 C2. Sie dienen dort allerdings nur zu einer zusätzlichen Leistungsmessung oder zur Spannungsanzeige. Für eine Schutzfunktion wird die Spannungsmessung nicht verwendet.

Die Erfindung hat den Vorteil, daß eine Anpassung des Überstromauslösers an jede Art von Verbrauchern vorgenommen werden kann und somit stets der richtige Ansprechwert auch bei von der Nennspannung abweichender Netzspannung zur Verfügung steht.

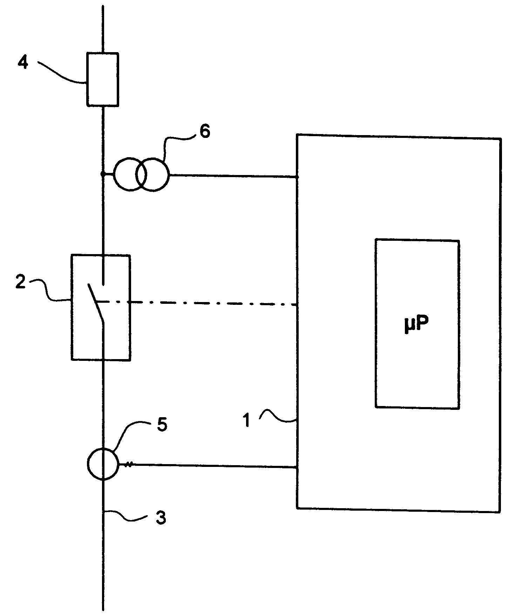

Die Erfindung soll nachstehend anhand des in der Figur schematisch dargestellten Ausführungsbeispiels erläutert werden.

Der elektronische Überstromauslöser 1 eines Leistungsschalters 2, der einen am Netz 3 angeschlossenen Verbraucher 4 schützen soll, ist über einen Stromwandler 5 mit dem Netz 3 verbunden. Zusätzlich wird mit einem Spannungswandler 6 die Netzspannung U gemessen und an den elektronischen Überstromauslöser 1 übermittelt, der in Abhängigkeit von der gemessenen Netzspannung U einen Strom-Ansprechwert I für den Überstromauslöser 1 nach der Beziehung

$$I = a/U + b + cU + dU^2$$

einstellt, wobei die Faktoren a, b, c, d zuvor von dem Betreiber der Anlage entsprechend der Charakteristik des angeschlossenen Verbrauchers 4 eingestellt werden können.

Für die Überwachung rein ohmscher Verbraucher gilt $I \sim U$, d. h. $a = b = c = 0$. Für die Überwachung von Verbrauchern mit konstantem Strom gilt $I = const.$, d. h. $a = c = d = 0$. Für die Überwachung von Verbrauchern mit konstanter Leistungsaufnahme gilt $I \sim 1/U$, d. h. $b = c = d = 0$.

Um Verbraucher mit gemischtem Verhalten zu überwachen, können alle Konstanten a, b, c, d $\neq 0$ ein-

gestellt werden.

Die Erfindung ist nicht beschränkt auf die hier dargestellten Ausführungsbeispiele. Vielmehr ist es möglich, durch Kombination und Modifikation der Mittel und Merkmale weitere Ausführungsvarianten zu realisieren, ohne den Rahmen der Erfindung zu verlassen.

**Patentansprüche**

1. Verfahren zum Betrieb eines mit einem Mikroprozessor arbeitenden elektronischen Überstromauslösers eines Leistungsschalters, dem als Eingangsgrößen die Netzspannung und der Strom durch einen Verbraucher zur Verfügung stehen, **dadurch gekennzeichnet,** daß der Strom-Ansprechwert des elektronischen Überstromauslösers durch den Mikroprozessor in Abhängigkeit von der Netzspannung nach einer auf den angeschlossenen Verbraucher einstellbaren Strom/Spannungs-Beziehung verstellt wird.

2. Verfahren nach Anspruch 1, **dadurch gekennzeichnet,** daß die Verstellung des Strom-Ansprechwertes nach der Strom/Spannungs-Beziehung

$$I = a/U + b + cU + dU^2 + ...$$

erfolgt.

3. Mit einem Mikroprozessor arbeitender elektronischer Überstromauslöser (1) eines Leistungsschalters (2), dem als Eingangsgrößen die Netzspannung und der Strom durch einen Verbraucher zugeführt sind, zur Durchführung des Verfahrens nach einem der Ansprüche 1 oder 2, **dadurch gekennzeichnet,** daß der Mikroprozessor einen Strom-Ansprechwert nach einer auf den angeschlossenen Verbraucher (4) einstellbaren Strom/Spannungs-Beziehung bereitstellt.

4. Elektronischer Überstromauslöser nach Anspruch 3, **dadurch gekennzeichnet,** daß er mit Einstellmöglichkeiten für die Konstanten a, b, c, d, ... einer durch den Mikroprozessor zu verarbeitenden Strom/Spannungs-Beziehung

$$I = a/U + b + cU + dU^2 + ...$$

ausgerüstet ist.